# EUROPÄISCHE PATENTSCHRIFT

(11) **EP 2 591 221 B1**
(45) Veröffentlichungstag und Bekanntmachung des Hinweises auf die Patenterteilung: **21.10.2015**
(21) Anmeldenummer: 11761255.6
(22) Anmeldetag: 05.07.2011
(51) Int. Cl.: F02D 41/02, F02D 19/06, F02D 41/00

(54) **STEUERUNG ZUM UMSCHALTEN DER KRAFTSTOFFZUFUHR ZU EINER VERBRENNUNGSKRAFTMASCHINE VON EINEM ERSTEN KRAFTSTOFF AUF EINEN ZWEITEN KRAFTSTOFF**
CONTROLLER FOR SWITCHING THE FUEL SUPPLY TO AN INTERNAL COMBUSTION ENGINE FROM A FIRST FUEL TO A SECOND FUEL
COMMANDE PERMETTANT DE PASSER D'UN PREMIER CARBURANT À UN SECOND CARBURANT POUR L'ALIMENTATION EN CARBURANT D'UN MOTEUR À COMBUSTION INTERNE

(30) Priorität: 05.07.2010 DE 102010026151
(43) Veröffentlichungstag der Anmeldung: 15.05.2013
(73) Patentinhaber: Porep GmbH, 23775 Großenbrode (DE)
(72) Erfinder: POREP, Thomas, 23775 Großenbrode (DE)
(74) Vertreter: Lobemeier, Martin Landolf
(86) Internationale Anmeldenummer: PCT/DE2011/001420
(87) Internationale Veröffentlichungsnummer: WO 2012/010148

(56) Entgegenhaltungen:
- EP-A2- 1 057 988
- WO-A1-2009/063933
- DE-A1- 19 531 022
- DE-A1- 19 828 772
- DE-A1-102006 018 736
- DE-A1-102007 056 819
- FR-A1- 2 890 694
- US-A1- 2009 292 442

## Beschreibung

Die Erfindung betrifft ein Verfahren zum Umschalten der Kraftstoffzufuhr zu einer Verbrennungskraftmaschine von einem ersten Kraftstoff auf einen zweiten Kraftstoff, wobei der erste Kraftstoff in einem ersten Tank und der zweite Kraftstoff in einem zweiten Tank gelagert ist, die Tanks und die Verbrennungskraftmaschine mittels eines Stellventils miteinander verbunden sind, und das Stellventil einen Regelweg aufweist, bei dem der Verbrennungskraftmaschine in einer ersten Position ausschließlich der erste Kraftstoff aus dem ersten Tank, in einer zweiten Position ausschließlich der zweite Kraftstoff aus dem zweiten Tank und in einer Mehrzahl von zwischen der ersten und der zweiten Position angeordneten weiteren Positionen ein Gemisch aus erstem und zweiten Kraftstoff zugeführt wird.

US 2009/0292442 A1 offenbart ein Kraftstoffzufuhrsystem mit zwei Tanks, wobei jeder der beiden Tanks einen Drucksensor aufweist.

WO 2009/063933 A1 offenbart ein Kraftstoffzufuhrsystem mit zwei Tanks, wobei die Kraftstoffzusammensetzung mit geschlossenem Regelkreis geregelt wird.

Die Umstellung zwischen der Kraftstoffzufuhr aus mit unterschiedlichen Kraftstoffer befüllten Tanks zu einer Verbrennungskraftmaschine, beispielsweise einem Schiffsdieselmotor, der wahlweise mit Schweröl (HFO) und Marinedieselöl (MGO) betrieben werden kann, erfolgt regelmäßig über ein 3/2-Wege-Stellventil, das über je eine Leitung mit den beiden Kraftstofftanks und mit einer Leitung mit der Verbrennungskraftmaschine verbunden ist.

Das Stellventil ermöglicht (bei Vorhandensein eines gewissen Spiels), dass in einer ersten Stellung des Stellventils ausschließlich Kraftstoff aus dem ersten Tank und in einer zweiten Stellung ausschließlich Kraftstoff aus dem zweiten Tank zur Verbrennungskraftmaschine gefördert wird. Zwischen diesen Stellungen weist das Stellventil einen Regelweg auf, über den der Anteil des ersten Kraftstoffs kontinuierlich abnimmt und der Anteil des zweiten Kraftstoff kontinuierlich ansteigt bis schließlich der Betrieb der Verbrennungskraftmaschine von erstem Kraftstoff auf zweiten Kraftstoff vollständig umgestellt ist.

Die Umstellung zwischen den Kraftstoffarten ist außerordentlich zeitaufwändig, da die Umstellung aufgrund regelmäßig auftretender unterschiedlicher Viskositäten eine Temperierung zumindest eines Kraftstoffs erforderlich macht und die Umstellung daher recht langsam erfolgen muss.

Aufgabe der Erfindung ist es daher, ein Verfahren zum Umschalten der Kraftstoffzufuhr zu einer Verbrennungskraftmaschine von einem ersten Kraftstoff auf einen zweiten Kraftstoff bereitzustellen, dass ein schnelles Umschalten zwischen zwei Kraftstaffarten, beispielsweise Schweröl (HFO) und Marinedieselöl (MGO bzw. MDO), ermöglicht.

Die Aufgabe wird durch das Verfahren mit den Merkmalen von Anspruch 1 gelöst. Die Unteransprüche geben vorteilhafte Ausgestaltungen der Erfindung wieder.

Bei Untersuchungen zur vorliegenden Anmeldung konnte festgestellt werden, dass die Stellung des Stellelements, z.B. eines Handrads oder eines automatisch angetriebenen Rads, nicht zwingend mit dem Regelweg des Stellventils korreliert. Beispielsweise stimmt tatsächlich der Regelweg eines als Drehschieberventil ausgebildeten Stellventils mit dem vom Stellelement, also dem Drehschieber, vollständig überstrichenen Drehbereich des Ventils nur dann überein, wenn der Druck in beiden Tanks identisch ist und eine für das jeweilige Ventil spezifische Förderrate eingehalten wird, wobei unterschiedliche Förderraten, z.B. 500 1/h im Verhältnis zu 250 1/h, geringe Unterschiede zwischen Stellung des Stellventils und Anfangs- und Endposition des Regelwegs ergeben. Auch die Mittelposition des Regelwegs, an der ein 50:50 Gemisch beider Kraftstoffe vorliegt, ist bei unterschiedlichen Förderraten leicht verschoben.

Liegt aber eine Druckdifferenz zwischen den beiden Tanks vor, wie dieses beispielsweise bei einem unterschiedlichen Füllstand der Tanks der Fall ist, konnte zum einen festgestellt werden, dass sich die Länge des Regelwegs - also dem Bereich, in dem tatsächlich eine Änderung der Kraftstoffzusammensetzung erfolgt - im Verhältnis zur Anfangs- und Endstellung des Stellventils erheblich verkürzt und daher auch die Anfangs- und Endposition des Regelwegs nicht mehr mit der Anfangs- und Endstellung des Drehschiebers übereinstimmt.

Mit anderen Worten bewirkt bei einer zwischen den Tanks bestehenden Druckdifferenz ein Drehen des Stellelements aus seiner Ausgangsstellung in Richtung seiner Endstellung zunächst keine Änderung der der Verbrennungskraftmaschine zugeführten Kraftstoffzusammensetzung, da die Anfangsposition des Regelwegs in Richtung der Endstellung des Stellelements verschoben ist. Erst bei weiterem Drehen des Stellelements und nach Erreichen der Anfangsposition des Regelwegs wird die Kraftstoffzusammensetzung kontinuierlich verändert, wobei die Endposition des Regelwegs vor der Endstellung des Stellelements erreicht wird.

Der verkürzte Regelweg kann z.B. bei einem Drehschieberventil nun gezielt für ein schnelleres Umschalten zwischen dem Betrieb der Verbrennungskraftmaschine mit dem ersten Kraftstoff auf den Betrieb mit dem zweiten Kraftstoff genutzt werden, da der Schieber nicht mit langsamer Geschwindigkeit den gesamten Drehbereich überstreichen muss. Für die Umstellung reicht nämlich nur das Durchfahren des Regelwegs, der aber bei Druckunterschieden zwischen den Tanks kürzer als der vom Drehschieber vollständig überstrichene Drehbereich ist.

Erfingdungsgemäß muss das Stellelement also lediglich in Abhängigkeit von der Druckdifferenz zwischen den beiden Tanks in die Stellung gebracht werden, in der sich die Anfangsposition des Regelwegs befindet. Dieses Anfahren kann mit hoher Geschwindigkeit erfolgen, da ja bekannt ist, dass keine Änderung der Kraftstoffzusammensetzung zwischen der Anfangsstellung des Schiebers und der Anfangsposition des Regelwegs erfolgt. Das Durchfahren des Regelwegs erfolgt dann (wie gewohnt) in einer vorbestimmten Zeit, wobei die Endposition des Regelwegs vor der Endstellung des Stellelements erreicht wird. Das Stellelement kann nach Erreichen der Endposition des Regelwegs mit erhöhter Geschwindigkeit in seine Endstellung gebracht werden, da ja auch hier bekannt ist, dass eine Änderung der Kraftstoffzusammensetzung zwischen der Endposition des Regelwegs und der Endstellung des Stellelements nicht mehr erfolgt.

Zur Durchführung des Verfahrens muss für die mit der Verbrennungskraftmaschine verbundene Kraftstoffanlage zunächst die Länge des Regelwegs in Abhängigkeit von verschiedenen Druckdifferenzen zwischen den beiden Tanks und die erste Position des Regelwegs, also dessen Anfangsposition, und/oder die zweite Position des Regelwegs, also dessen Endposition, in Bezug auf die Stellung des Stellelements bestimmt werden.

Diese Werte werden in einer Tabelle abgelegt, sodass die Stellung des Stellventils mit dem Regelweg für ein bestimmtes Druckverhältnis zwischen den Tanks korreliert werden kann.

Alternativ kann für die Regelung der Anlage bei für verschiedene Druckverhältnisse bekannter Länge des Regelwegs auf die Bestimmung der ersten oder zweiten Position verzichtet werden, indem bei laufendem Betrieb die erste Position oder bei Drehen des Stellelements in der anderen Richtung die zweite Position mittels einer Temperaturänderung des vom Stellventil zur Verbrennungskraftmaschine geförderten Kraftstoffs erfasst wird. Wie oben erwähnt müssen die Kraftstoffe aufgrund unterschiedlicher Viskosität unterschiedlich temperiert werden, sodass ein Mischen beider Kraftstoffarten zwangsweise zu einer Temperaturänderung führt. Eine Temperaturänderung (vorbestimmter Höhe) markiert jedoch den Beginn des Regelwegs, sodass dieser Parameter in Echtzeit erfasst werden kann.

Als zusätzliche Korrektur empfiehlt es sich auch, die Länge des Regelwegs sowohl in Abhängigkeit von der Druckdifferenz zwischen dem ersten Tank und dem zweiten Tank als auch in Abhängigkeit von der Förderrate von Kraftstoff zur Verbrennungskraftmaschine zu bestimmen und in einer Tabelle zu hinterlegen, da hier eine noch genauere Ansteuerung des Stellventils erfolgen kann.

Die Druckdifferenz zwischen den beiden Tanks kann besonders einfach erfolgen, wenn die Druckdifferenz aus dem Füllstand des ersten Tanks und dem Füllstand des zweiten Tanks berechnet wird.

Schließlich ist das Stellventil bevorzugt als Drehschieberventil ausgebildet.

## Patentansprüche

1. Verfahren zum Umschalten der Kraftstoffzufuhr zu einer Verbrennungskraftmaschine von einem ersten Kraftstoff auf einen zweiten Kraftstoff, wobei
- der erste Kraftstoff in einem ersten Tank und der zweite Kraftstoff in einem zweiten Tank gelagert ist,
- die Tanks und die Verbrennungskraftmaschine mittels eines Stellventils miteinander verbunden sind, und
- das Stellventil einen Regelweg aufweist, bei dem der Verbrennungskraftmaschine in einer ersten Position ausschließlich der erste Kraftstoff aus dem ersten Tank, in einer zweiten Position ausschließlich der zweite Kraftstoff aus dem zweiten Tank und in einer Mehrzahl von zwischen der ersten und der zweiten Position angeordneten weiteren Positionen ein Gemisch aus erstem und zweiten Kraftstoff zugeführt wird,
**dadurch gekennzeichnet, dass**
die Stellung des Stellventils mit dem Regelweg mittels einer Tabelle korreliert wird, in der
- die Länge des Regelwegs der Druckdifferenz zwischen dem ersten Tank und dem zweiten Tank und die erste Position und/oder die zweite Position einer vorbestimmten Stellung des Stellventils zugeordnet ist,
oder
- die Länge des Regelwegs der Druckdifferenz zwischen dem ersten Tank und dem zweiten Tank zugeordnet ist und die erste Position oder die zweite Position mittels einer Temperaturänderung des vom Stellventils zur Verbrennungskraftmaschine geförderten Kraftstoffs erfasst wird.

2. Verfahren nach Anspruch 1, **dadurch gekennzeichnet, dass** die Länge des Regelwegs der Druckdifferenz zwischen dem ersten Tank und dem zweiten Tank in Abhängigkeit von der Förderrate von Kraftstoff zur Verbrennungskraftmaschine zugeordnet ist.

3. Verfahren nach einem der vorhergehenden Ansprüche, **dadurch gekennzeichnet, dass** die Länge des Regelwegs in einer vorbestimmten Zeit durchlaufen wird.

4. Verfahren nach einem der vorhergehenden Ansprüche, **dadurch gekennzeichnet, dass** die Druckdifferenz aus dem Füllstand des ersten Tanks und dem Füllstand des zweiten Tanks berechnet wird.

5. Verfahren nach einem der vorhergehenden Ansprüche, **dadurch gekennzeichnet, dass** das Stellventil ein Drehschieberventil ist.

6. Verfahren nach einem der vorhergehenden Ansprüche, **dadurch gekennzeichnet, dass** der erste Kraftstoff Schweröl (HFO) und der zweite Kraftstoff Marinedieselöl (MGO) ist.

## Claims

1. A method for switching the fuel supply to an internal combustion engine from a first fuel to a second fuel,
- the first fuel being stored in a first tank and the second fuel being stored in a second tank,
- the tanks and the internal combustion engine being connected to each other by means of a control valve and
- the control valve having a control path for which the infernal combustion engine is fed only the first fuel from the first tank in a first position, only the second fuel from the second tank in a second position, and a mixture of the first fuel and the second fuel in a plurality of additional positions arranged between the first position and the second position,
**characterized in that**
the setting of the control valve is correlated with the control path by means of a table, in which
- the length of the control path is associated with the pressure difference between the first tank and the second tank and the first position and/or the second position is associated with a predetermined setting of the control valve,
or
- the length of the control path is associated with the pressure difference between the first tank and the second tank and the first position or the second position is detected by means of a temperature change of the fuel conveyed to the internal combustion engine by the control valve.

2. The method according to claim 1, **characterized in that** the length of the control path is associated with the pressure difference between the first tank and the second tank as a function of the conveying rate of fuel to the internal combustion engine.

3. The method according to one of the preceding claims, **characterized in that** the length of the control path is traversed in a predetermined time.

4. The method according to one of the preceding claims, **characterized in that** the pressure difference is calculated from the filling level of the first tank and the filling level of the second tank.

5. The method according to one of the preceding claims, **characterized in that** the control valve is a rotary slide valve.

6. The method according to one of the preceding claims, **characterized in that** the first fuel is heavy oil (HFO) and the second fuel marine diesel oil (MGO).

## Revendications

1. Procédé de commutation de l'alimentation en carburant vers un moteur à combustion interne d'un premier carburant à un deuxième carburant, à savoir que
- le premier carburant est stocké dans une première cuve, et le deuxième carburant dans une deuxième cuve,
- les cuves et le moteur à combustion interne sont reliés entre eux au moyen d'une vanne de régulation, et que
- la dite vanne de régulation présente une course dans laquelle dans une première position, exclusivement le premier carburant de la première cuve, dans une deuxième position exclusivement le deuxième carburant de la deuxième cuve, et dans une majorité d'autres positions situées entre la première et la deuxième position un mélange de premier et de deuxième carburant est amené au moteur à combustion interne,
**caractérisée en ce que**
la position de la vanne de régulation est correlé avec la course au moyen d'un tableau dans lequel
- la longueur de la course est attribuée à la différence de pression entre la première et la deuxième cuve et la première position et/ou la deuxième position est attribuée à une position prédéfinie de la vanne de régulation,
ou
- la longueur de la course est attribuée à la différence de pression entre la première et la deuxième cuve et la première position ou la deuxième position est saisie au moyen d'un changement de température du carburant transporté de la vanne de régulation au moteur à combustion interne.

2. Procédé selon la revendications 1, **caractérisé en ce que** la longueur de la course est attribuée à la différence de pression entre la première cuve et la deuxième selon le débit de carburant vers le moteur à combustion interne.

3. Procédé selon une des précédentes revendications, **caractérisé en ce que** la longueur de la course se fait sur une durée prédéfinie.

4. Procédé selon une des revendications précédentes, **caractérisé en ce que** la différence de pression se calcule sur le niveau de la première cuve et sur le niveau de la deuxième cuve.

5. Procédé selon une des revendications précédentes, **caractérisé en ce que** la vanne de régulation est une vanne rotative.

6. Procédé selon une des revendications précédentes, **caractérisé en ce que** le premier carburant est du pétrole lourd (HFO) et le deuxième carburant est un hydrocarbure (MGO).
